Europäisches Patentamt

European Patent Office

Office européen des brevets

(11) Publication number: **0 562 204 A1**

## EUROPEAN PATENT APPLICATION

(21) Application number: **92430010.6**

(22) Date of filing: **24.03.92**

(51) Int. Cl.5: **C08F 10/02**, C08F 2/34,
C08F 4/69

(43) Date of publication of application:
**29.09.93 Bulletin 93/39**

(84) Designated Contracting States:
**FR**

(71) Applicant: **BP CHEMICALS S.N.C.**
**Tour Neptune la Défense 1, 20, Place de Seine**
**F-92400 Courbevoie(FR)**

(72) Inventor: **Speakman, John Gabriel**
**Service Propriété Industrielle, BP N6**
**13117 - Lavera(FR)**

(74) Representative: **Hymers, Ronald Robson**
**c/o BP Chemicals S.n.c., Centre de Recherche, Service Propriété, Industrielle**
**B.P. no. 6**
**F-13117 Lavera (FR)**

(54) **Polymerization process.**

(57) Process for polymerisation of ethylene or copolymerisation of ethylene and at least one other alpha-olefin in the gaseous phase, in the presence of a catalyst based on chromium oxide, supported on a refractory oxide and activated by a thermal treatment.

The process involves polymerisation or copolymerisation being carried out in the presence of hydrogen at a level such that the ratio of the partial pressures of hydrogen and ethylene ($pH_2/pC_2H_4$) is greater than or equal to 0.10.

The process reduces or eliminates excessive swelling at the die during extrusion of polymers manufactured with chromium catalyst.

Rank Xerox (UK) Business Services
(3.10/3.6/3.3.1)

The invention relates to a process for polymerisation of olefins in the gaseous phase using a catalyst based on chromium oxide supported on a refractory oxide and activated by a thermal treatment, polymerisation being carried out in the presence of hydrogen to reduce swelling at the die of the polymer.

It is known to manufacture ethylene polymers in accordance with a polymerisation process in the gaseous phase in the presence of a chromium catalyst activated by thermal treatment. In general it is considered that the presence of hydrogen in the gas phase is not essential and that the hydrogen has scarcely any influence on the catalytic performance or on the properties of the polymer produced. On the other hand, the hydrogen is useful for reducing the density of the recycling gases and thus to lighten the load on the compressor.

Polymers manufactured with chromium catalysts, in particular with chromium catalysts modified with titanium, have a troublesome behaviour when they are extruded, i.e. excessive swelling at the die.

It has now been found that it is possible to eliminate this problem and to obtain a polymer with reduced swelling.

Thus according to the present invention there is provided a process for polymerisation of ethylene or copolymerisation of ethylene and at least one other alpha-olefin in the gaseous phase, in the presence of a catalyst based on chromium oxide, supported on a refractory oxide and activated by a thermal treatment, such catalyst being employed in the form of a prepolymer of ethylene and possibly another alpha-olefin, the process being characterised by the fact that such polymerisation or copolymerisation is carried out in the presence of hydrogen at a level such that the ratio of the partial pressures of hydrogen and ethylene ($pH_2/pC_2$) is greater than or equal to 0.10.

The invention will now be described by way of example only.

Example 1

a) Preparation of an Activated Catalyst

A catalyst powder sold by Joseph Crosfield and Sons (Warrington, Great Britain) under the commercial name "EP30" (R) is subjected for 5 hours to thermal treatment at 815°C in a fluidised bed reactor, using a current of dry air. This catalyst, made up of chromium acetate III carried on a porous silica, contains approx. 1% by weight of chromium. After thermal treatment, the catalyst powder activated in this way is cooled down to the ambient temperature (20°C) and maintained under a nitrogen atmosphere for storage.

b) Preparation of a Prepolymer Powder

Into a metallic reactor of 1 m³, equipped with a double jacket and an agitator rotating at 140 rpm, there is introduced under nitrogen atmosphere 500 litres of gasoline, 341 mM of tri-n-octylaluminium, 7.1 kg of dry catalyst powder prepared previously as well as 3 g of an antistatic compound (ASA3) sold by the Company SHELL (Holland) containing 0. 55% by weight of chromium and calcium.

The catalyst suspension prepared in this way is heated to 75°C, then there is fed into the reactor for 4 hours and 40 minutes ethylene at a regular flow rate of 15 kg/h.

At the end of the prepolymerisation reaction, the suspension obtained is cooled down to 60°C, then an extraction operation is carried out. To do this agitation of the reactor is stopped and after the prepolymer obtained has been decanted, the liquid phase floating on the top is removed and replaced by 300 litres of gasoline heated beforehand to 60°C and containing 170 mM of tri-n-octylaluminium and 1.8 g of the antistatic compound "ASA-3". This extraction operation is repeated twice. Then 680 mM of tri-n-octylaluminium is added to the prepolymer suspension. After removing the solvent and drying under nitrogen, a prepolymer is recovered in the form of a powder active in polymerisation and having excellent dry running properties.

c) Polymerisation of Ethylene in the Gaseous Phase with Hydrogen

Into a fluidised bed reactor, 45 cm in diameter, there is fed under nitrogen atmosphere 70 kg of a polyethylene powder, inert and anhydrous, by way of charge powder, deriving from a previous reaction. Then there is fed into the reactor a gaseous mixture heated to 98°C made up of hydrogen, ethylene, nitrogen and butene-1, moving at a rising velocity of 40 cm/s. The partial pressures (pp) of the constituents of this mixture are:

pp hydrogen = 0.17 MPa
pp ethylene = 0.56 MPa
pp nitrogen = 0.85 MPa
pp butene-1 = 0.02 MPa

There is then fed into the reactor 0.7 litres of a molar solution of triethylaluminium (TEA) in gasoline and the reactor is kept in these conditions for 1 hour. Into this reactor there is then fed in stages at 10 g every 10 minutes the prepolymer prepared previously.

At the end of about 3 hours from starting to feed in the prepolymer, there is fed continuously and directly into the reactor 3 ml/h of a molar solution of triethylaluminium in gasoline.

After a period of stabilisation of the polymerisation conditions, it is observed that 20 kg/h of a polyethylene powder having a content of 3 ppm of chromium, a density of 0.935 g/ml and a melt index (MI2) of 0.35 g/10 minutes is recovered.

d) Granulation and blown extrusion

The polyethylene powder prepared previously is pelletised in a ZSK53 extruder (Werner and Pfeiderer, Germany) at temperatures between 160 and 240°C with addition of the following stabilisers:

Irganox 1010 0.1% by weight

Irgafox 168 0.15% by weight

Viton A 0.035% by weight

The melt index of the pellets (MI2) is 0.23 g/10 minutes.

The pellets prepared previously are used to feed a blown extrusion machine (FHB 054 FISCHER, GERMANY). The weight of a bottle blown under standard conditions is 38.5 g, a figure which represents a normal swelling at the die acceptable for a polymer manufactured with a chromium catalyst. The reference for this study of swelling at the die is Rigidex HD 5502 SA (BP Chemicals, GB) for which swelling is determined by reference at 35 g.

Example 2 (comparative)

a) Preparation of an activated catalyst
    Procedure precisely as in example 1a.
b) Preparation of prepolymer powder
    Procedure precisely as in example 1b.
c) Polymerisation of ethylene in gaseous phase without hydrogen
    Procedure as in example 1c, except that the partial pressures (pp) of the constituents of the gaseous mixture are:

pp ethylene = 0.56 MPa

pp nitrogen = 1.02 MPa

pp butene-1 = 0.02 MPa

The polymer recovered at 20 kg/h after the stabilisation period has the same content of chromium (3 ppm), the same density (0. 935 g/ml) and the same melt index (MI2 = 0.35 g/10 min) as the polymer prepared as in example 1c.

d) Granulation and blown extrusion
    The procedure is exactly the same as example 1d. It is found that the weight of a blown bottle in the same standard conditions is 50 g, a figure which represents excessive swelling at the die and unacceptable for a moulding machine equipped with normal extruders.

## Claims

1. A process for polymerisation of ethylene or copolymerisation of ethylene and at least one other alpha-olefin in the gaseous phase, in the presence of a catalyst based on chromium oxide, supported on a refractory oxide and activated by a thermal treatment, such catalyst being employed in the form of a prepolymer of ethylene and possibly another alpha-olefin, the process being characterised by the fact that such polymerisation or copolymerisation is carried out in the presence of hydrogen at a level such that the ratio of the partial pressures of hydrogen and ethylene ($pH_2/pC_2H_4$) is greater than or equal to 0.10.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 175 532 (BP CHEMICALS) <br> * claims 1,8 * <br> --- | 1 | C08F10/02 <br> C08F2/34 |
| X | EP-A-0 275 675 (BP CHEMICALS) <br> * claim 1 * <br> * page 7, line 6 - line 15 * <br> --- | 1 | |
| A | EP-A-0 453 116 (BP CHEMICALS) <br> * example 1 * <br> ----- | | |

TECHNICAL FIELDS SEARCHED (Int. Cl.5)

C08F

The present search report has been drawn up for all claims

| Place of search | Date of completion of the search | Examiner |
|---|---|---|
| THE HAGUE | 05 OCTOBER 1992 | FISCHER B.R. |